# EUROPEAN PATENT SPECIFICATION

(11) **EP 4 244 692 B1**
(45) Date of publication and mention of the grant of the patent: **21.08.2024**
(21) Application number: 21820691.0
(22) Date of filing: 11.11.2021
(51) Int. Cl.: G05D 1/00, B60W 30/06, B60W 60/00, B62D 15/02, B60W 50/00

(54) **OPTIMIZATION OF PERFORMANCE IN AUTOMOTIVE AUTONOMOUS DRIVING OF RECURRENT LOW SPEED MANOEUVRES IN DIGITAL ROAD MAPS-FREE AREAS**
OPTIMIERUNG DER LEISTUNG BEIM AUTONOMEN FAHREN VON WIEDERHOLTEN MANÖVERN NIEDRIGER GESCHWINDIGKEIT IN DIGITALEN STRASSENKARTENFREIEN BEREICHEN IN KRAFTFAHRZEUGEN
OPTIMISATION DES PERFORMANCES, EN CONDUITE AUTONOME AUTOMOBILE, DE MANOEUVRES RÉCURRENTES À FAIBLE VITESSE DANS DES ZONES SANS CARTE ROUTIÈRE NUMÉRIQUE

(30) Priority: 11.11.2020 IT 202000026969
(43) Date of publication of application: 20.09.2023
(73) Proprietor: C.R.F. Società Consortile per Azioni, 10043 Orbassano (TO) (IT)
(72) Inventor: POERIO, Nicola, 10043 Orbassano (TO) (IT); MARENCO, Silvano, 10043 Orbassano (TO) (IT)
(74) Representative: Studio Torta S.p.A.
(86) International application number: PCT/IB2021/060456
(87) International publication number: WO 2022/101825

(56) References cited:
- EP-B1- 3 586 211
- US-A1- 2020 033 868
- US-A1- 2020 174 471

## Description

### Cross-Reference To Related Applications

This patent application claims priority to Italian patent application No. 102020000026969 filed 11/11/2020.

### Technical Sector of the Invention

The present invention generally relates to automotive driving assistance, and in particular to optimization of performance in automotive autonomous driving of recurrent low speed manoeuvres in digital road maps-free areas.

The present invention finds application in any type of road motor vehicle, both for the transport of people, such as a passenger car, a bus, a camper van, etc., and for the transport of goods, such as an industrial motor vehicle (lorry, truck-trailer, articulated vehicle, etc.) or a light or medium-heavy commercial motor vehicle (van, panel van, chassis cab, etc.).

### Background of the Invention

As is known, in recent years car manufacturers have invested considerable resources in researching advanced motor vehicle driving assistance/aid systems (Advanced Driver Assistance Systems - ADAS) to improve driving safety and comfort.

For this reason and due to the fact that they will help achieve the goals set by the European Union for reducing road accidents, ADAS are one of the fastest growing segments in the automotive sector and bound to become increasingly popular in the years to come.

ADAS safety features are designed to avoid collisions and accidents by offering technologies that warn drivers of potential problems, or to avoid collisions by implementing safeguard measures and taking control of the motor vehicles. Adaptive features can automate lighting, provide adaptive cruise control, automate braking, incorporate GPS/traffic signalling, connect smartphones, alert drivers of other motor vehicles of hazards, keep drivers in the right lane, or show what is in blind spots.

ADAS technology is based on vision/camera systems, sensory systems, automotive data networks, vehicle-to-vehicle (V2V) or vehicle-to-infrastructure (V2I) communication systems. Next-generation ADAS systems will increasingly take advantage of wireless connectivity to offer added value to V2V or V2I communication.

According to studies conducted by the Accident Research of the German Association of Insurers (GDV), in fact, lane departure warning systems alone are able to prevent up to 15% of road accidents, while assistance at intersections can avoid up to 35% of road accidents.

Technological developments such as radar and camera integration, and the fusion of sensory data from multiple applications, are expected to bring about a change in motor vehicles that will be more substantial over the next two decades than it has been in the 130 years that have elapsed since the first motor vehicle saw the light of day.

The end-point of these technological developments is usually defined as self-driving cars or autonomous cars.

The two terms are overwhelmingly most often used interchangeably, as in the present discussion, whereas, instead, in some specialized environments these two terms are used differently to make subtle distinctions.

In particular, the term autonomous cars was used to indicate those cars that resemble today's cars, i.e. with the seats facing forward and a steering wheel, and wherein the driver is deprived of driving tasks only in certain circumstances, for example for self-parking or self-braking or for Adaptive Cruise Control to adjust the speed so as to maintain a safe distance from the cars ahead. In the near future, autonomous cars could take total control of the driving in heavy traffic or on motorways.

The term self-driving cars has instead been used to indicate those cars that are considered to represent a step forward compared to autonomous cars, i.e. cars in which the steering wheel will completely disappear, and which will make the whole trip by using the same sensory system used by autonomous cars.

Disregarding this subtle distinction, the true distinction is between assisted driving motor vehicles, where the motor vehicle "assists" the driver (who is therefore not exempt from paying attention), by braking if the vehicle in front brakes, slowing down when required, and so on, and automatic or automated driving motor vehicles, where the motor vehicle, unlike the above one, drives fully autonomously and the driver may not pay attention.

An example of this terminological distinction is given by the article by Wood et al, (2012), in which the author writes: "This article generally uses the term autonomous instead of the term automated. The term "autonomous" was chosen "because it is the term that is currently in more widespread use (and thus is more familiar to the general public). However, the term "automated" is arguably more accurate as it connotes control or operation by a machine, while "autonomous" connotes acting alone or independently. Currently, most vehicles (which do not know they have a person in the seat), use communication with the Cloud, or with other vehicles, and do not enter the destination independently. This is why the term "automated" would be better to describe this vehicle concept".

In 2014, SAE (Society of Automotive Engineers) International, a standardization body in the aerospace, automotive and vehicle industry that works on developing and defining engineering standards for motorized vehicles of all kinds, including cars, trucks, ships and aircraft, published a new International Standard J3016, which defined six different levels for automatic driving. This classification is based on how much the driver has to intervene on the motor vehicle, rather than on the motor vehicle's capabilities.

The six levels of automatic driving are:
Level 0 - No automation: The driver must take care of all driving aspects, with no electronic support;
Level 1 - Driver assistance: The driver must take care of all driving aspects, but is supported with information (in the form of visual or acoustic alerts) by electronic systems that can signal the presence of dangerous situations or adverse conditions. At this level, the car merely analyses and represents the situations, thus the driver has total and full responsibility for driving the vehicle;
Level 2 - Partial automation: The driver takes care of the driving, but there is a first driving integration. At this level, the motor vehicle intervenes in acceleration and braking through safety systems, such as for example brake assist and anti-collision emergency braking. The direction and traffic control are still under the control of the driver, although in certain scenarios with clearly visible road surface marking, the steering can be managed in a partially automated way (systems called Lane Keeping Assist, and in the most complete versions Traffic Jam Assist, Autosteer, Highway Assist, depending on the car brand);
Level 3 - Conditional automation: the motor vehicle is able to manage the driving in ordinary environmental conditions, managing acceleration, braking and direction, while the driver intervenes in problematic situations in the event of a system request or if the driver himself/herself verifies adverse conditions;
Level 4 - High automation: The automatic system is able to manage any eventuality, but must not be activated in extreme driving conditions as in case of bad weather;
Level 5 - Full automation: The automatic driving system is able to manage all situations that can be managed by humans, without any human intervention.

### Object and Summary of the Invention

The Applicant has found that due to the presence of obstacles and surrounding motor vehicles, when moving in traffic a motor vehicle always travels different paths that are not predictable or programmable a priori, even when it has to reach the same destination via the same route, whereas "controlled" situations exist, typically within localized, private or protected areas (or in any case with limited and controlled access), where a motor vehicle travels at low speed one or more predetermined paths or trajectories, which are always the same, and where the presence of obstacles (for example other surrounding vehicles), which could force the motor vehicle to modify its trajectory, is limited (if any).

For example, in a courtyard of a house, a motor vehicle travels several times the same path at low speed from a first point, for example an entrance gate, to a second point, for example a garage; or, in a loading/unloading area of a cluster of warehouses, a motor vehicle travels a plurality of predetermined paths from an entrance point to reach a loading/unloading point of a respective warehouse (a so-called "docking" manoeuvre); yet further, in a parking lot, a motor vehicle typically travels along predefined trajectories to go from an entrance point to a given parking area.

Currently, in the above-described situations, the motor vehicle's driver must typically perform the same manoeuvres repeatedly to reach the desired destinations travelling the predefined paths. Furthermore, the motor vehicle's driver, if he/she is unfamiliar with the configuration of the controlled area, often he/she finds it difficult to reach his/her destination; a typical example is the difficulty of finding a free space in a public or private car park, or an assigned unloading area in a freight loading/unloading area.

In general, there is a clear risk of faulty manoeuvres which can lead to a considerable waste of time, all the more if consideration is given to the fact that it can be demonstrated that the driver's attention typically decreases during routine manoeuvres.

To perform low-speed manoeuvres, as early as in 2008 the Applicant proposed in EP 2 136 275 B1 an automotive autonomous driving system, in which an automotive electronic control unit implemented a self-learning path procedure which causes the automatic storage of driving data of the motor vehicle while travelling the path under the manual control of a motor vehicle's driver.

An improvement to this technology was proposed in 2018 by the Applicant in EP 3 586 211 B1, wherein recurrent low speed manoeuvres are stored in a database of recurrent low speed manoeuvres on board the motor vehicle in the form of data descriptive of the environments in which the recurrent low speed manoeuvres are repeatable in autonomous driving and comprising, in particular, geolocation data representative of starting and end points of the recurrent low speed manoeuvres and of spatial constraints, obstacles, and associated dimensions in the environments where the recurrent low speed manoeuvres will be repeated in autonomous driving. A recurrent low speed manoeuvre stored in the database of recurrent low speed manoeuvres is then repeated in autonomous driving by causing the motor vehicle to drive along an autonomous driving path, with associated longitudinal and lateral dynamics, computed based on the associated stored data descriptive of the recurrent low speed manoeuvre and on data received from a sensory system of the motor vehicle, so as to take account of both the spatial constraints, obstacles and associated dimensions identified in the environments where the recurrent low speed manoeuvre is to be repeated in autonomous driving identified when the recurrent low speed manoeuvre was stored, and of any new spatial constraints and/or obstacles appeared in the environment where the recurrent low speed manoeuvre will be repeated after when it was stored and which are identifiable based on the data received from the sensory system of the motor vehicle. Based the computed autonomous driving path, commands are then computed and outputted to the autonomous driving system of the motor vehicle to cause the recurrent low speed manoeuvre to be repeated in autonomous driving.

The Applicant has been able to experience that the technology disclosed in EP 3 586 211 B1, although already largely satisfactory, has significant room for improvement in certain respects, in particular in the optimization of the performance in automotive autonomous driving of recurrent low speed manoeuvres in digital road maps-free areas.

In this respect, US 2020/033868 A1 discloses the generation of autonomous driving policies through a set of autonomous driving agents and a driving policy generation module comprising a set of driving policy learning modules to generate and improve the policies based on the collective experiences gathered by the driving agents. The driving agents collect driving experiences to create a knowledge base and the driving policy learning modules process collective driving experiences to extract driving policies. The driving agents are trained through the driving policy learning modules in a parallel and distributed way to find new and efficient driving policies and behaviours more quickly and efficiently. Parallel and distributed learning enables the accelerated training of more intelligent autonomous driving agents.

The aim of the present invention is hence to further improve the technology disclosed in EP 3 586 211 B1.

According to the present invention, an automotive autonomous driving system, a collaborative automotive autonomous driving system, and an associated software, are claimed in the appended Claims.

### Brief Description of the Drawings

Figure 1 shows an example of a digital road map-free area in which recurrent low speed manoeuvres can be performed in autonomous driving.
Figure 2 shows a block diagram of an automotive autonomous driving system to perform recurrent low speed manoeuvres in autonomous driving.
Figure 3 schematically shows a collaborative machine learning approach to optimize the automotive autonomous driving in digital road maps-free areas.

### Detailed Description of Preferred Embodiments of the Invention

The present invention will now be described in detail with reference to the accompanying drawings in order to allow a skilled person to implement it and use it. Various modifications to the described embodiments will be readily apparent to those of skill in the art and the general principles described may be applied to other embodiments and applications without however departing from the protective scope of the present invention as defined in the appended claims. Therefore, the present invention should not be regarded as limited to the embodiments described and illustrated herein, but should be allowed the broadest protection scope consistent with the features described and claimed herein.

Unless otherwise defined, all technical and scientific terms used herein have the same meaning commonly understood by one of ordinary skill in the art to which the invention belongs. In case of conflict, the present specification, including the definitions provided, will control. Furthermore, the examples are provided for illustrative purposes only and as such should not be considered limiting.

In particular, the block diagrams included in the attached figures and described below are not to be understood as a representation of the structural features, i.e. constructional limitations, but must be understood as a representation of functional features, i.e. intrinsic properties of the devices defined by the effects obtained, that is to say functional restrictions, which can be implemented in different ways, so as to protect the functionalities thereof (operational capability).

In order to facilitate the understanding of the embodiments described herein, reference will be made to some specific embodiments and a specific language will be used to describe the same. The terminology used herein is used for the purpose of describing particular embodiments only, and is not intended to limit the scope of the present invention.

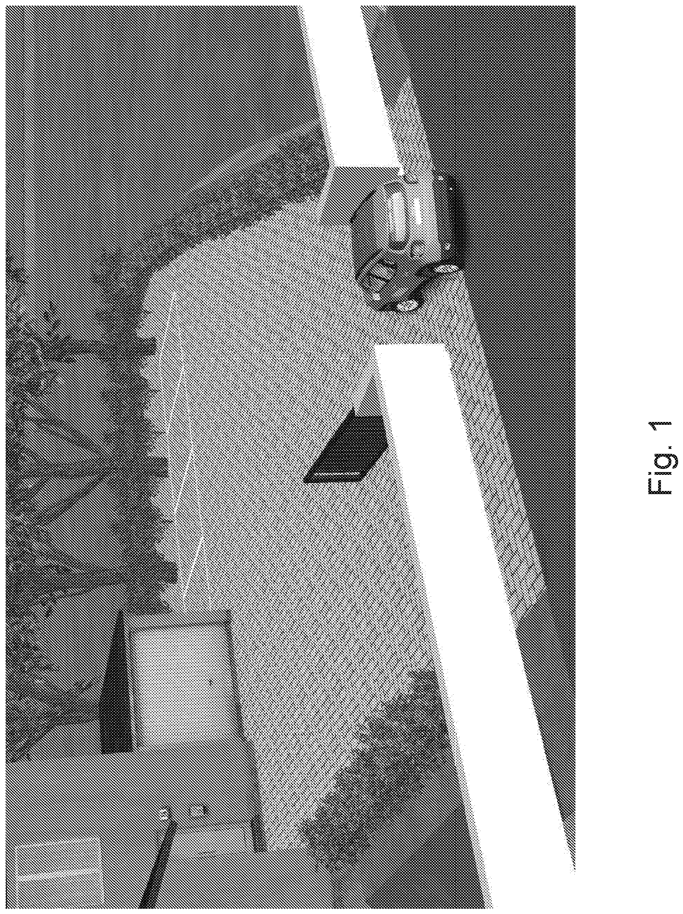

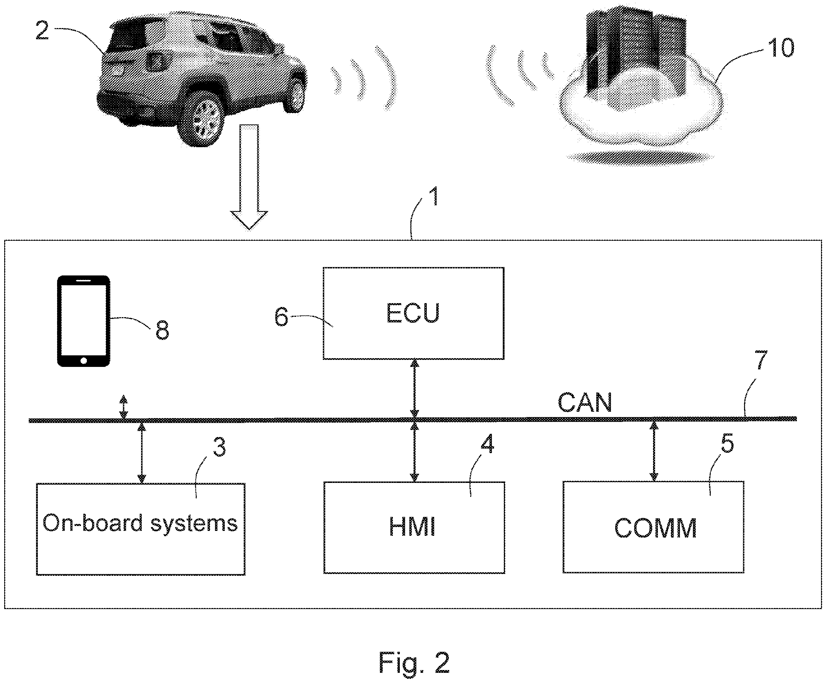

Figure 1 exemplarily shows a digital road map-free area in which recurrent low speed manoeuvres can be performed in autonomous driving, while Figure 2 shows a block diagram of an automotive autonomous driving system, referenced by reference numeral **1,** configured to cause a motor vehicle, referenced by reference numeral **2,** to perform recurrent low speed manoeuvres in autonomous driving in digital road map-free areas of the type exemplarily shown in Figure 1.

As shown in Figure 2, the automotive autonomous driving system **1** comprises:
- automotive on-board systems **3,** of which only those involved in the implementation of the present invention will be described herein, and comprising, *inter alia,* a propulsion system, a braking system, a steering system, an infotainment system, and a sensory system designed to sense motor vehicle-related quantities exemplarily comprising wheel angle, steering wheel angle, yaw, longitudinal and lateral acceleration, position, etc.; and an automotive geolocation system, usually of the satellite type, designed to output position data indicative of the geographical position of the motor vehicle **2;**
- an automotive user interface **4** (HMI - Human Machine Interface) to enable the occupants of the motor vehicle **2** to interact with some of the automotive on-board systems **3,** such as the infotainment system, the air conditioning system and, with regard to the present invention, the automotive autonomous driving system **1;**
- an automotive communication interface **5;** and
- automotive electronic storage and processing resources **6** operatively communicating, via an automotive communication network **7,** such as a high-speed CAN, also known as a C-CAN, a FlexRAy or others, to the automotive on-board systems **3,** to the automotive user interface **4** and to the automotive communication interface **5** and designed to store and run a software comprising instructions which, when executed by the automotive electronic storage and processing resources **6,** cause the automotive electronic storage and processing resources **6** to become configured to communicate and cooperate with the automotive on-board systems **3,** the automotive user interface **4** and the automotive communication interface **5** to implement the automotive autonomous driving system **1** to cause recurrent low speed manoeuvres to be performed in autonomous driving in digital road map-free areas as described in detail below.

As regards the performance of automotive recurrent low speed manoeuvres in autonomous driving, it is worth noting that what really matters on-board the motor vehicle **2** are the operations which are to be implemented in order to carry out this functionality rather than the hardware and software architectures through which these operations are implemented, to such an extent that they could be implemented by means of a concentrated architecture, i.e., by a single automotive electronic control unit, or by a distributed co-operative architecture, i.e., distributed among several communicating and co-operating automotive electronic control units, depending on the hardware and software architectures that the automotive manufacturer deems appropriate to implement this functionality.

For this reason, and also for descriptive convenience, and without this being in any way considered limiting the hardware and software architectures, purely by way of example in the following description the performance of automotive recurrent low speed manoeuvres in autonomous driving will be described as entirely delegated to a single automotive electronic control unit, always identified by reference numeral **6.**

In order to allow occupants of the motor vehicle **2** to interact with the automotive autonomous driving system **1,** the automotive user interface **4** comprises:
- an on-board display,
- hard-type selection and activation buttons, typically arranged on a steering wheel (not shown) of the motor vehicle **2,** or soft-type ones, i.e. displayed on the on-board display,
- a voice recognition system (optional), and
- a software application (APP) developed by the automotive manufacturer to allow users, once downloaded, installed and appropriately set up on their user terminals **8** in the form of hand-held or wearable personal electronic communication devices, such as smartphones, tablets, personal computers, smartwatches, to interact with some of the automotive on-board systems **3,** such as the infotainment system, the air conditioning system and, with regard to the present invention, the automotive autonomous driving system **1.**

The automotive user interface **4** is configured to receive commands imparted by the motor vehicle driver and exemplarily comprising a command to start a stored recurrent low speed manoeuvre, a command to select a stored recurrent low speed manoeuvre, etc., and/or to inform the driver of the motor vehicle **2** about the degree of progress of a stored recurrent low speed manoeuvre and about operating parameters of the motor vehicle **2;** and/or to request intervention of the driver of the motor vehicle **2,** for example to stop the motor vehicle **2** or engaging the reverse gear, when the recurrent low speed manoeuvre is only partially performed through autonomous driving. Requests for intervention and information may be provided to the driver of the motor vehicle **2** visually, vocally, and/or acoustically, wherein the acoustic/vocal mode is preferred to result in the driver not diverting visual attention away from the road and, hence, to immediately perceive possible dangers and obstacles.

The automotive communication interface **5** comprises:
- a wired bidirectional communication system, conveniently in the form of the standard serial communication system known as the USB (Universal Serial Bus) interface, which, as is known, comprises special connectors, known as USB connectors or ports, which can be connected to other USB connectors by means of cables known as USB cables;
- a short-range radio communication system, hereinafter referred to as 'V2D' communication system, acronym for Vehicle-to-Device, operable to automatically detect the presence of short-range radio communication systems, hereinafter referred to as 'D2V' communication system, acronym for Device-to-Vehicle, of user terminals **8** within its communication range and to communicate with the detected and identified D2V communication systems within its communication range, possibly following an appropriate pairing procedure with the same, if provided by the implemented communication technology;, and
- a long-range radio communication system, hereinafter for convenience abbreviated to 'V2X' communication system, acronym for Vehicle-to-Infrastructure, operable to communicate with a remote service centre.

The V2D and D2V communication systems are designed to communicate via one or different short-range communication technologies comprising, conveniently, Bluetooth technology, e.g., according to specification 4.0 and also known by the names of Bluetooth Low Energy, Bluetooth LE or Bluetooth Smart, NFC technology, and Wi-Fi technology.

The V2X communication system is designed to communicate with the remote service centre via one or different long-range communication technologies, comprising, conveniently, present and future cellular communication technologies such as 2G, 3G, 4G, 5G, etc.

In order to enable automotive recurrent low speed manoeuvre to be performed in autonomous driving, the electronic control unit **6** is programmed to perform three high-level tasks:
- learning and storing recurrent low speed manoeuvres performable by the motor vehicle **2** in autonomous driving;
- identifying stored recurrent low speed manoeuvres to be proposed to the driver for repetition in autonomous driving based on the current location of the motor vehicle **2;** and
- repeating (replaying) stored recurrent low speed manoeuvres.

Examplarily, a low speed manoeuvre may be meant as a manoeuvre whose maximum speed does not exceed 30 km/h during storing (whether the motor vehicle **2** starts from standstill or is already moving), and 20 km/h during repetition.

The automotive electronic control unit **6** is programmed to learn both recurrent low speed manoeuvres performed manually by the driver of the motor vehicle **2** and manoeuvres stored in the automotive electronic control unit **6** and performed in autonomous driving. The storage in the automotive electronic control unit **6** of a recurrent low speed manoeuvre performed in a given position may in fact be the result not only of the learning of a recurrent low speed manoeuvre performed manually by the driver of the motor vehicle **2,** but also of the programming of a recurrent low speed manoeuvre performed by means of an appropriate external programming device or even of the downloading of a recurrent low speed manoeuvre stored in a remote server where the same manoeuvre was stored following its learning when it was performed manually by the same or another driver in a different motor vehicle **2.**

The automotive electronic control unit **6** is further programmed to store the recurrent low speed manoeuvres in a database of recurrent low speed manoeuvres in the form of manoeuvre data descriptive of the environments in which the recurrent low speed manoeuvres are to be repeated in autonomous driving, in particular descriptive of the free spaces available for the repetition of the recurrent low speed manoeuvres in autonomous driving, and comprising, conveniently, geolocation data representative of the current manoeuvres of the motor vehicle **2** and in particular representative of starting and end points of the recurrent low speed manoeuvres and of spatial constraints, obstacles and associated dimensions in the environments where the recurrent low speed manoeuvres are to be repeated in autonomous driving.

In particular, for this purpose, the automotive electronic control unit **6** is further programmed to compute, based on data from the automotive geolocation system or on SLAM (Simultaneous Localization and Mapping) techniques, which allow to reconstruct a map of an unknown environment and to localize oneself within the reconstructed map, and on data from the automotive sensory system, and to store manoeuvre data exemplarily comprising:
- geolocation data of the current manoeuvre of the motor vehicle **2,**
- descriptive data of the environment in which the manoeuvre is performed and, conveniently, comprising geolocation data of a plurality, conveniently three or more, reference points in the environment, for example, as shown in Figure 1, the pillars of an entrance gate, a tree along the path travelled, etc.,
- time data indicative of either a period of the day or a precise time of the day in which the current manoeuvre is performed,
- data indicative of the number of operations that make up the low speed manoeuvre performed,
- data indicative of the width of the path travelled, and
- speed data indicative of the current speed of the motor vehicle **2** during the manoeuvre.

Conveniently, the manoeuvre data do not comprise data indicative of the types of motor vehicles **2** used to perform the recurrent low speed manoeuvres when these were stored, so that the data descriptive of the recurrent low speed manoeuvres are independent of the types of the motor vehicles **2** used to perform the recurrent low speed manoeuvres.

The database of recurrent low speed manoeuvres can be stored in the internal memory of the automotive electronic control unit **6** or in a dedicated storage unit connected externally to the automotive electronic control unit **6** and, if necessary, automatically duplicated, through an automatic synchronisation procedure, in a dedicated remote repository, e.g., a remote server, where it can be shared with other drivers, e.g., other family members, who may need to perform the same recurrent low speed manoeuvres.

The automotive electronic control unit **6** is further programmed to store, together with the manoeuvre data, identification data that allow low speed manoeuvres to be subsequently either automatically or manually identified and selected, for example descriptive names assigned to them by the driver of the motor vehicle **2** via the automotive user interface **4** after they have been learned, and manoeuvre repetition indices indicative of the number of times the stored recurrent low speed manoeuvres have been repeated in autonomous driving.

The automotive electronic control unit **6** is also conveniently programmed to learn and store recurrent low speed manoeuvres and consequently populate the database of recurrent low speed manoeuvres by implementing the operations described in EP 3 586 211 B1.

In a different embodiment, the database of recurrent low speed manoeuvres could be populated externally to the motor vehicle **2** and downloaded to the automotive electronic control unit **6** via the automotive communication interface **5.**

The automotive electronic control unit **6** is further programmed to cause stored recurrent low speed manoeuvres available for repetition in autonomous driving to be selectable both manually by the driver via the automotive user interface **4** and autonomously by the automotive electronic control unit **6** based on the current position of the motor vehicle **2,** and by identifying those stored recurrent low speed manoeuvre(s) whose geolocation data correspond to the current position of the motor vehicle **2,** which can be determined based on geolocation data from the automotive geolocation system or on SLAM techniques.

In particular, the stored recurrent low speed manoeuvres available for repetition in autonomous driving may be autonomously selected by the automotive electronic control unit **6** based on the current geographical position of the motor vehicle **2** by comparing current position data indicative of the current position of the motor vehicle **2** from the automotive geolocation system, or computed by merging sensory data from the automotive sensory system, e.g., from ultrasound sensors, surround view cameras, laser scanners, etc, with geolocation data of the stored recurrent low speed manoeuvres.

The automotive electronic control unit **6** is further programmed to cause a stored recurrent low speed manoeuvre to be repeated in autonomous driving in response to a command given by the driver of the motor vehicle **2** via the automotive user interface **4,** e.g., in response to actuation of a start button displayed on the on-board display of either the motor vehicle **2** or of a personal electronic communication device of a user, or in response to recognition of a specific gesture made by the driver of the motor vehicle **2** on the controls of the motor vehicle **2,** e.g., by removing both hands from the steering wheel and/or one foot from the accelerator.

The automotive electronic control unit **6** is further programmed to cause a stored recurrent low speed manoeuvre to be repeated in autonomous driving:
- by first checking, based on geolocation data from the automotive geolocation system or via SLAM techniques, that the motor vehicle **2** is where the recurrent low speed manoeuvre is to be repeated in autonomous driving, not necessarily exactly at the starting point, but also in its surroundings, or even halfway along the path of the recurrent low speed manoeuvre, and
- then generating, based on the manoeuvre data and the data received from the sensory system of the motor vehicle **2** and indicative of the motion of the motor vehicle **2** and of the spatial constraints and obstacles and associated dimensions identified in the environment in which the recurrent low speed manoeuvre is to be repeated in autonomous driving, appropriate commands to be outputted to the automotive on-board systems **3** for the repetition of the recurrent low speed manoeuvre in autonomous driving.

In an alternative embodiment, the automotive electronic control unit **6** is programmed to cause a recurrent low speed manoeuvre to be performed in autonomous driving by first computing elementary displacements, defined in a given reference system, to be performed by the motor vehicle **2** and then generating, based on the computed elementary displacements and using known algorithms, specific commands to be outputted to the automotive on-board systems **3** to cause the stored recurrent low speed manoeuvre to be repeated in autonomous driving.

The automotive electronic control unit **6** is further programmed to cause the motor vehicle **2** to repeat a recurrent low speed manoeuvre stored in autonomous driving by making the motor vehicle **2** to drive along an autonomous driving path, with associated longitudinal and lateral dynamics, real-time computed based on the manoeuvre data of the recurrent low speed manoeuvre stored in the database of recurrent low speed manoeuvres and of data received from the sensory system of the motor vehicle **2,** whereby the autonomous driving path and the associated longitudinal and lateral dynamics of autonomous driving are computed by taking account of both the spatial constraints, obstacles, and associated dimensions identified in the environments where the recurrent low speed manoeuvre is to be repeated in autonomous driving identified when it was stored, and of any new spatial constraints and/or obstacles appeared in the environment where the recurrent low speed manoeuvre is to be repeated after it was stored and which can be identified based on the data received from the sensory system of the motor vehicle **2.**

Therefore, the stored recurrent low speed manoeuvres are not repeated in autonomous driving by simply repeating the commands given to the automotive on-board systems **3** by the drivers of the motor vehicles **2** when the recurrent low speed manoeuvres were stored, but by real-time computing the respective autonomous driving paths based on the stored data descriptive of the recurrent low speed manoeuvres and of data from the sensory systems of the motor vehicles **2.**

In this way, the stored recurrent low speed manoeuvres can be repeated, without having to modify or re-store them, even if, in the environments where they are to be repeated in autonomous driving, new constraints and/or obstacles should appear, and/or the existing ones and/or their dimensions must have been modified with respect to when the recurrent low speed manoeuvres were stored. Therefore, the appearance of new constraints and/or obstacles in the environments where the stored recurrent low speed manoeuvres are to be repeated in autonomous driving, or the modification of the existing ones and/or their dimensions compared to when the recurrent low speed manoeuvres were stored, the computation of the respective autonomous driving paths based on the data descriptive of the stored recurrent low speed manoeuvres and on the data provided by the sensory systems of the motor vehicles **2** causes the recurrent low speed manoeuvres repeated in autonomous driving to be different from those stored.

In both embodiments, moreover, the automotive electronic control unit **6** is also conveniently programmed to compute the autonomous driving paths to be driven by the motor vehicle **2** in autonomous driving, by also taking account of the type of motor vehicle **2** with which the recurrent low speed manoeuvres are repeated in autonomous driving, so as to make their repetition in autonomous driving dependent on the type of motor vehicle **2** that has to repeat them in autonomous driving.

The automotive electronic control unit **6** may also be programmed to allow the driver of the motor vehicle **2,** for safety reasons, to exercise a manual control with priority during the repetition of the recurrent low speed manoeuvres in autonomous driving, for example to timely react to anomalous situations, such as the appearance of obstacles along the path. To this end, during autonomous driving, the driver of the motor vehicle **2** may be allowed to exercise, without interrupting the repetition of the manoeuvre, an active control at least over the brake and accelerator pedals on the gearstick, for example to allow reversing the direction of travel if this is not possible in autonomous driving and therefore requires the intervention of the driver, and/or an active control over the steering, with the result that the repetition of the manoeuvre may be interrupted, depending on whether the intervention on the steering is considered intrusive or not.

In any case, the automotive electronic control unit **6** is programmed to give priority to manual commands imparted by the driver over those deriving from autonomous driving.

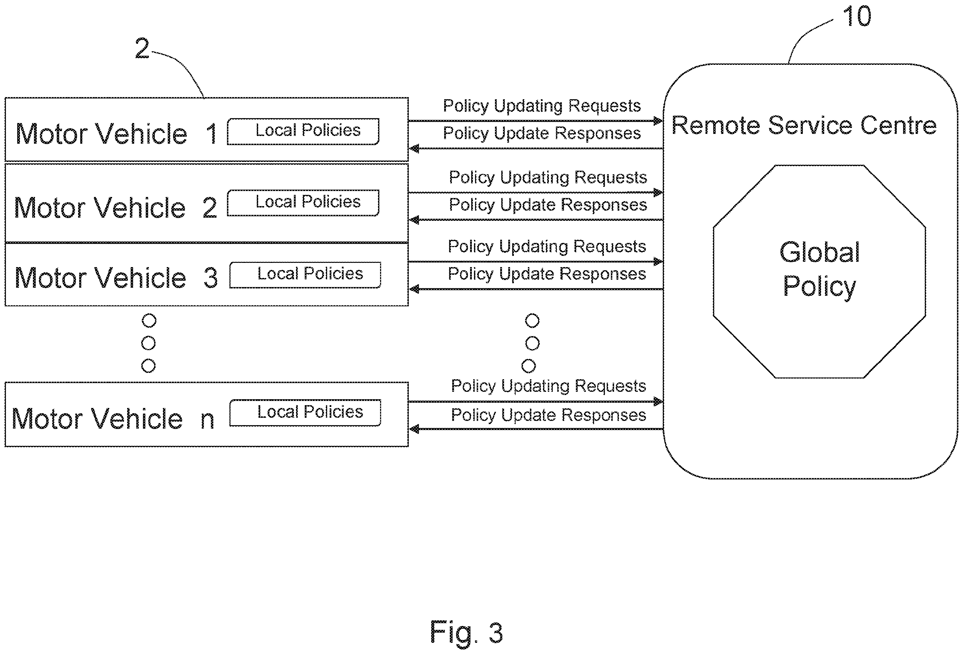

The automotive electronic control unit **6** is further programmed to optimize repetition in autonomous driving, hereinafter also referred to as navigation in autonomous driving, of recurrent low speed manoeuvres stored in the database of recurrent low speed manoeuvres by means of a collaborative navigation optimization approach implemented by the automotive electronic control unit **6** and a remote service centre, in the manner described below with reference to Figure 3, where the remote service centre is referenced by reference numeral **10.**

In particular, in order to optimize performance of a recurrent low speed manoeuvres in autonomous driving, the automotive electronic control unit **6** is programmed to:
- store in the database of recurrent low speed manoeuvres, in association with the manoeuvre data of each recurrent low speed manoeuvre, data descriptive of a corresponding local navigation optimization policy that enables the automotive electronic control unit **6** to compute an autonomous driving path to be driven by the motor vehicle **2** from a starting point to an end point, with the associated longitudinal and lateral dynamics, during the recurrent low speed manoeuvre; and
- update the local navigation optimization policy through the collaborative navigation optimization approach.

In order to update a local navigation optimization policy of a recurrent low speed manoeuvre, the automotive electronic control unit **6** is programmed to communicate with the remote service centre **10** via its automotive communication interface **5** to:
- send to the remote service centre **10** a local navigation optimization policy updating request containing the manoeuvre data of the recurrent low speed manoeuvres stored in the recurrent low speed manoeuvre database;
- receive from the remote service **10** a local navigation optimization policy updating response containing updating data for updating the local navigation optimization policy; and
- in response to the receipt of the local navigation optimization policy update response, update the stored local navigation optimization policy based on the updating data contained in the received local navigation optimization policy update response.

Consequently, the remote service centre **10** is designed to:
- receive from the automotive electronic control unit **6** the local navigation optimization policy updating request containing manoeuvre data of the recurrent low speed manoeuvre;
- in response to the receipt of the local navigation optimization policy updating request, compute updating data for updating the local navigation optimization policy based on the manoeuvre data contained in the received local navigation optimization policy updating request and a global navigation optimization policy; and
- send to the automotive electronic control unit **6** the local navigation optimization policy updating response containing the computed updating data of the local navigation optimization policy.

The remote service centre **10** is further designed to:
- compute the global navigation optimization policy based on the manoeuvre data contained in the local navigation optimization policy updating requests received from the automotive autonomous driving systems **1** of the motor vehicles **2** that cooperate with the remote service centre **10** in optimizing performance of recurrent low speed manoeuvres in autonomous driving.

In a preferred embodiment:
- the local navigation optimization policies implemented by the automotive autonomous driving systems **1** of the motor vehicles **2** that cooperate with the remote service centre **10** in optimizing performance in autonomous driving of the recurrent low speed manoeuvres stored in the respective databases of recurrent low speed manoeuvres are conveniently implemented via local Artificial Neural Networks (ANNs) all of the same typology or architecture, conveniently Deep Neural Networks (DNNs), even more conveniently Deep Convolutional Neural Networks (DCNNs), whose artificial neural network weights are stored in the databases of low speed recurrent manoeuvres in association with the data descriptive of the associated low speed recurrent manoeuvres; and
- the global navigation optimization policy is consequently implemented by the remote service centre **10** via a global artificial neural network of the same type or architecture as the local artificial neural networks that implement the local navigation optimization policies.

In this embodiment, the collaborative navigation optimization approach is consequently in the form of a collaborative machine learning approach, where the manoeuvre data contained in the local navigation optimization policy updating requests sent by the automotive autonomous driving systems **1** of the motor vehicles **2** that cooperate with the remote service centre **10** in optimizing performance in autonomous driving of the recurrent low speed manoeuvres stored in the respective databases of recurrent low speed manoeuvres are used to train the global artificial neural network that implements the global navigation optimization policy implemented by the remote service centre **10,** based on which updating weights of the local artificial neural networks that implement the local navigation optimization policies are then computed and sent by the remote service centre **10** to the motor vehicles **2.**

In this embodiment, to update a local navigation optimization policy of a recurrent low speed manoeuvre, the automotive electronic control unit **6** is programmed to:
- send to the remote service centre **10** a local navigation optimization policy updating request containing the manoeuvre data of the recurrent low speed manoeuvres stored in the recurrent low speed manoeuvre database;
- receive from the remote service **10** a local navigation optimization policy updating response containing updating weights of the local artificial neural network that implements the local navigation optimization policy; and
- in response to the receipt of a local navigation optimization policy update response, update the stored weights of the local artificial neural network that implements the local navigation optimization policy based on the updating weights contained in the received local navigation optimization policy update response, for example by simply storing the latter instead of the previous ones.

Consequently, the remote service centre **10** is configured to:
- receive from the automotive electronic control unit **6** the local navigation optimization policy updating request containing manoeuvre data of the recurrent low speed manoeuvre;
- in response to the receipt of the local navigation optimization policy update response, compute updating weights of the artificial neural network that implements local navigation optimization policy based on the global artificial neural network that implements the global navigation optimization policy and on manoeuvre data of the recurrent low speed manoeuvre contained in the received local navigation optimization policy updating request; and
- send to the automotive electronic control unit **6** a local navigation optimization policy updating response containing the updating weights of the local artificial neural network that implements the computed local navigation optimization policy.

In this embodiment, the remote service centre **10** is further designed to:
- train the global artificial neural network that implements the global navigation optimization policy based on the manoeuvre data of the recurrent low speed manoeuvres contained in the local navigation optimization policy updating requests received from the automotive autonomous driving systems **1** of the motor vehicles **2** that cooperate with the remote service centre **10** in optimizing performance of recurrent low speed manoeuvres in autonomous driving.

The automotive electronic control unit **6** is further designed to:
- store in the database of recurrent low speed manoeuvres, in association with the manoeuvre data of the recurrent low speed manoeuvres, data descriptive of the autonomous driving paths performed by the motor vehicles **2** while performing the recurrent low speed manoeuvres in autonomous driving;
- check whether an autonomous driving path computed based on a local navigation optimization policy for performing in autonomous driving an associated recurrent low speed manoeuvre is better than the autonomous driving path stored in the database of low speed recurrent manoeuvres in association with the same recurrent low speed manoeuvre and computed during the previous performance in autonomous driving of the same recurrent low speed manoeuvre, based on a proprietary criterion of assessment of the computed path that exemplarily takes account of one or more of the following quantities: the length of the path, the time taken to perform the recurrent low speed manoeuvre, whether the path crosses areas where obstacles are present, the distance of the motor vehicle **2** from the obstacles during the performance of the recurrent low speed manoeuvre in autonomous driving, etc.;
- if the computed autonomous driving path is determined to be better than the stored autonomous driving path, update the stored autonomous driving path based on the computed autonomous driving path, for example by replacing the stored autonomous driving path with the computed autonomous driving path, and repeat the recurrent low speed manoeuvre in autonomous driving based on the computed autonomous driving path; and
- if the computed autonomous driving path is worse than the stored autonomous driving path, implement one or both of the following operations:
   ∘ repeat the recurrent low speed manoeuvre in autonomous driving using the stored autonomous driving path, and
   ∘ send to the remote service **10** a local navigation optimization policy updating request, wait for the local navigation optimization policy updating response, update the local navigation optimization policy, and compute a new autonomous driving path, with relative autonomous driving longitudinal and lateral dynamics.

An examination of the characteristics of the automotive autonomous driving system of the present invention, allows the advantages that it allows to obtain to be appreciated.

In particular, the present invention allows the automotive autonomous driving navigation to be optimised during recurrent low speed manoeuvres in digital road maps-free areas via a collaborative learning approach, whereby the navigation experiences of the motor vehicles **2,** represented by the local navigation optimization policies based on which the motor vehicles **2** compute the autonomous driving paths to be driven during the recurrent low speed manoeuvres, are used to train and improve over time a global navigation optimization policy which, in turn, is used to train and improve the local navigation optimization policies.

## Claims

1. An automotive autonomous driving system **(1)** to cause a motor vehicle **(2)** to perform recurrent low speed manoeuvres in autonomous driving in digital road maps-free areas;
the automotive autonomous driving system **(1)** is configured to store recurrent low speed manoeuvres in the form of associated manoeuvre data descriptive of the environments in which the recurrent low speed manoeuvres are to be repeated in autonomous driving and comprising geolocation data of starting and end points of the recurrent low speed manoeuvres and of spatial constraints, obstacles, and associated dimensions, identified in the environments where the recurrent low speed manoeuvres are to be repeated in autonomous driving, when the recurrent low speed manoeuvres were stored;
the automotive autonomous driving system **(1)** is configured to cause the motor vehicle **(2)** to repeat stored recurrent low speed manoeuvres in autonomous driving by causing the motor vehicle **(2)** to autonomously drive along autonomous driving paths computed, along with associated longitudinal and lateral dynamics, based on both the manoeuvre data of the recurrent low speed manoeuvres and on data from an automotive sensory system, whereby the autonomous driving paths and the associated longitudinal and lateral dynamics are computed by taking account of both the spatial constraints, obstacles, and associated dimensions identified in the environments where the recurrent low speed manoeuvres are to be repeated in autonomous driving, identified when the recurrent low speed manoeuvres were stored, and of any new spatial constraints and/or obstacles appeared in the environments in which the recurrent low speed manoeuvres are to be performed in autonomous driving after the recurrent low speed manoeuvres were stored and which can be identified based on the data from the automotive sensory system;
the automotive autonomous driving system **(1)** is further designed to optimize repetition in autonomous driving of stored recurrent low speed manoeuvres based on a collaborative navigation optimization approach implemented by the automotive autonomous driving system **(1)** and a remote service centre **(10);**
the automotive autonomous driving system **(1)** is further designed to optimize performance in autonomous driving of a recurrent low speed manoeuvre by:
- storing, in association with the manoeuvre data of the recurrent low speed manoeuvre, local policy data descriptive of a local navigation optimization policy that enables performance of the recurrent low speed manoeuvre in autonomous driving to be optimized; and
- optimizing the local navigation optimization policy associated with the recurrent low speed manoeuvre via said collaborative navigation optimization approach;
the automotive autonomous driving system **(1)** is further designed to optimize a local navigation optimization policy of a recurrent low speed manoeuvre by:
- sending to the remote service centre **(10)** a local navigation optimization policy updating request containing the stored manoeuvre data of the recurrent low speed manoeuvre;
- receiving from the remote service centre **(10)** a local navigation optimization policy updating response containing updating data for updating the local navigation optimization policy; and
- in response to the receipt of the local navigation optimization policy update response, updating the stored local policy data descriptive of the local navigation optimization policy based on the updating data contained in the received local navigation optimization policy update response;
the automotive autonomous driving system **(1)** is **characterized by** being further designed to implement the local navigation optimization policy associated with a recurrent low speed manoeuvre via an Artificial Neural Network (ANN), conveniently a Deep Neural Network (DNN), even more conveniently a Deep Convolutional Neural Network (DCNN), in which the artificial neural network weights are stored in association with the manoeuvre data descriptive of the associated recurrent low speed manoeuvre;
and **in that** the collaborative navigation optimization approach is in the form of a collaborative machine learning approach, where the manoeuvre data contained in the local navigation optimization policy updating requests sent by the automotive autonomous driving systems **(1)** of the motor vehicles **(2)** that cooperate with the remote service centre **(10)** in optimizing navigation in autonomous driving during the stored recurrent low speed manoeuvres are used to train a global artificial neural network that implements a global navigation optimization policy implemented by the remote service centre **(10)** and that is of the same type as the local artificial neural networks that implement the local navigation optimization policies and based on which updating weights for updating the stored weights of the local artificial neural networks which implement the local navigation optimization policies are then computed and sent by the remote service centre **(10)** to the automotive autonomous driving systems **(1)** for updating the stored weights of the local artificial neural networks that implement the local navigation optimization policies.

2. The automotive autonomous driving system **(1)** of Claim 1, further designed to optimize a local navigation optimization policy of a recurrent low speed manoeuvre:
- sending to the remote service centre **(10)** a local navigation optimization policy updating request containing the manoeuvre data of the recurrent low speed manoeuvre;
- receiving from the remote service centre **(10)** a local navigation optimization policy updating response containing updating weights for updating the stored weights of the local artificial neural network that implements the associated local navigation optimization policy; and
- in response to the receipt of a local navigation optimization policy update response, updating the stored weights of the local artificial neural network that implements the associated local navigation optimization policy based on the updating weights contained in the received local navigation optimization policy update response.

3. The automotive autonomous driving system **(1)** of claim **1** or **2,** further designed to:
- store, in association with manoeuvre data of the recurrent low speed manoeuvres, data descriptive of autonomous driving paths performed in autonomous driving by the motor vehicle **(2)** during the performance in autonomous driving of the recurrent low speed manoeuvres;
- check whether an autonomous driving path computed based on a local navigation optimization policy for performing in autonomous driving an associated recurrent low speed manoeuvre is better than the stored autonomous driving path associated with the recurrent low speed manoeuvre, based on a proprietary path assessment criterion;
- if the computed autonomous driving path is determined to be better than the stored autonomous driving path, update the stored autonomous driving path based on the computed autonomous driving path, for example by replacing the stored autonomous driving path with the computed autonomous driving path, and repeat the recurrent low speed manoeuvre in autonomous driving using the computed autonomous driving path; and
- if the computed autonomous driving path is determined to be worse than the stored autonomous driving path, implement one or both of the following operations:
∘ performing the recurrent low speed manoeuvre in autonomous driving using the stored autonomous driving path, and
∘ sending to the remote service centre **(10)** a local navigation optimization policy updating request, waiting for a local navigation optimization policy updating response, updating the local navigation optimization policy, and computing a new autonomous driving path, with relative autonomous driving longitudinal and lateral dynamics.

4. A collaborative automotive autonomous driving system comprising:
- the automotive autonomous driving system **(1)** of any of the preceding claims; and
- the remote service centre **(10);**
the automotive autonomous driving system **(1)** and the remote service centre **(10)** are designed to communicate and cooperate in implementing said collaborative navigation optimization approach based on which performance of recurrent low speed manoeuvres in autonomous driving by the motor vehicle **(2)** is optimized.

5. The collaborative automotive autonomous driving system of claim **4,** wherein the remote service centre **(10)** is configured to:
- receive from the automotive autonomous driving system **(1)** the local navigation optimization policy updating request containing the manoeuvre data of the recurrent low speed manoeuvre;
- in response to the receipt of the local navigation optimization policy updating request, computing updating data for updating the local navigation optimization policy based on the manoeuvre data contained in the received local navigation optimization policy updating request and on a global navigation optimization policy; and
- sending to the automotive autonomous driving system **(1)** a local navigation optimization policy updating response containing the computed updating data for updating the local navigation optimization policy.

6. The collaborative automotive autonomous driving system of claim **5,** wherein the remote service centre **(10)** is further designed to:
- compute the global navigation optimization policy based on the manoeuvre data of the recurrent low speed manoeuvres contained in the local navigation optimization policy updating requests received from the automotive autonomous driving systems **(1)** that cooperate with the remote service centre **(10)** in optimizing performance of recurrent low speed manoeuvres in autonomous driving.

7. The collaborative automotive autonomous driving system of claim 5 or 6, wherein the remote service centre **(10)** is further designed to:
- implement the global navigation optimization policy via a global artificial neural network of the same type as the local artificial neural networks that implement the local navigation optimization policies; and
- train the global artificial neural network that implements the global navigation optimization policy based on the manoeuvre data of the recurrent low speed manoeuvres contained in the local navigation optimization policy updating requests received from the automotive autonomous driving systems **(1)** that cooperate with the remote service centre **(10)** in optimizing performance of recurrent low speed manoeuvres in autonomous driving.

8. The collaborative automotive autonomous driving system of claim **7,** when appended to claim **2,** wherein the remote service centre **(10)** is further designed to:
- receive from the automotive autonomous driving system **(1)** the local navigation optimization policy updating request containing the manoeuvre data of the recurrent low speed manoeuvre;
- in response to the receipt of the local navigation optimization policy updating request, compute the updating weights for updating the stored weights of the artificial neural network that implements the associated local navigation optimization policy based on the global artificial neural network that implements the global navigation optimization policy and on the manoeuvre data of the recurrent low speed manoeuvre contained in the received local navigation optimization policy updating request; and
- send to the automotive autonomous driving system **(1)** the local navigation optimization policy updating response containing the updating weights for updating the stored weights of the local artificial neural network that implements the computed local navigation optimization policy.

9. Software loadable in an automotive autonomous driving system **(1)** and in a remote service centre **(10)** and designed to cause, when run by the automotive autonomous driving system **(1)** and by the remote service centre **(10),** the automotive autonomous driving system **(1)** to become configured as claimed in any one of claims **1** to **3,** and the remote service centre **(10)** to become configured as claimed in any one of claims **4** to **8.**

## Patentansprüche

1. Autonomes Kraftfahrzeugfahrsystem (1), um ein Kraftfahrzeug (2) zu veranlassen, wiederkehrende Niedriggeschwindigkeitsmanöver beim autonomen Fahren in Gebieten ohne digitale Straßenkarten durchzuführen;
wobei das autonome Kraftfahrzeugfahrsystem (1) dazu konfiguriert ist, wiederkehrende Niedriggeschwindigkeitsmanöver in der Form zugeordneter Manöverdaten zu speichern, die die Umgebungen beschreiben, in welchen die wiederkehrenden Niedriggeschwindigkeitsmanöver beim autonomen Fahren wiederholt werden sollen und die Geolokalisierungsdaten von Start- und -endpunkten der wiederkehrenden Niedriggeschwindigkeitsmanöver und von räumlichen Auflagen, Hindernissen und zugeordneten Maßen umfassen, die in den Umgebungen, in welchen die wiederkehrenden Niedriggeschwindigkeitsmanöver beim autonomen Fahren wiederholt werden sollen, identifiziert werden, als die wiederkehrenden Niedriggeschwindigkeitsmanöver gespeichert wurden;
wobei das autonome Fahrsystem (1) für Kraftfahrzeuge dazu konfiguriert ist, das Kraftfahrzeug (2) zu veranlassen, gespeicherte wiederkehrende Niedriggeschwindigkeitsmanöver beim autonomen Fahren zu wiederholen, indem das Kraftfahrzeug (2) dazu veranlasst wird, autonom entlang autonomer Fahrwege zu fahren, die gemeinsam mit zugeordneten Längs- und seitlichen Dynamiken basierend sowohl auf den Manöverdaten der wiederkehrenden Niedriggeschwindigkeitsmanöver als auch auf Daten von einem Kraftfahrzeug-Sensorsystem berechnend werden, wobei die autonomen Fahrwege und die zugeordneten Längs- und seitlichen Dynamiken berechnet werden, indem sowohl die räumlichen Auflagen, Hindernisse und zugeordneten Maße berücksichtigt werden, die in den Umgebungen identifiziert werden, in denen die wiederkehrenden Niedriggeschwindigkeitsmanöver beim autonomen Fahren wiederholt werden sollen, die identifiziert wurden, als die wiederkehrenden Niedriggeschwindigkeitsmanöver gespeichert wurden, und beliebige neue räumliche Auflagen und/oder Hindernisse, die in den Umgebungen aufgetreten sind, in welchen die wiederkehrenden Niedriggeschwindigkeitsmanöver beim autonomen Fahren durchgeführt werden sollen, nachdem die wiederkehrenden Niedriggeschwindigkeitsmanöver gespeichert wurden, und die basierend auf den Daten aus dem Kraftfahrzeugsensorsystem identifiziert werden können;
wobei das autonome Kraftfahrzeugfahrsystem (1) ferner dazu konzipiert ist, beim autonomen Fahren die Wiederholung der gespeicherten wiederkehrende Niedriggeschwindigkeitsmanöver basierend auf einem kollaborativen Navigationsoptimierungsansatz zu optimieren, der durch das autonome Kraftfahrzeugfahrsystem (1) und ein entferntes Servicezentrum (10) implementiert wird;
wobei das autonome Kraftfahrzeugfahrsystem (1) ferner dazu konzipiert ist, Performance beim autonomen Fahren eines wiederkehrenden Niedriggeschwindigkeitsmanövers zu optimieren durch:
- Speichern gemeinsam mit den Manöverdaten des wiederkehrenden Niedriggeschwindigkeitsmanöver, lokaler Strategiedaten, die eine lokale Navigationsoptimierungsstrategie beschreiben, die es ermöglicht, die Performance des wiederkehrenden Niedriggeschwindigkeitsmanövers beim autonomen Fahren zu optimieren; und
- Optimieren der lokalen Navigationsoptimierungsstrategie, die wiederkehrenden Niedriggeschwindigkeitsmanöver zugeordnet ist, über den kollaborativen Navigationsoptimierungsansatz;
wobei das autonome Kraftfahrzeugfahrsystem (1) ferner dazu konzipiert ist, eine lokale Navigationsoptimierungsstrategie eines wiederkehrenden Niedriggeschwindigkeitsmanövers zu optimieren durch:
- Senden an das entfernte Servicezentrum (10) einer Aktualisierungsanforderung für die lokale Navigationsoptimierungsstrategie, die die gespeicherten Manöverdaten des wiederkehrenden Niedriggeschwindigkeitsmanövers enthält;
- Empfangen von dem entfernten Servicezentrum (10) einer Aktualisierungsantwort für die lokale Navigationsoptimierungsstrategie, die Aktualisierungsdaten zum Aktualisieren der lokalen Navigationsoptimierungsstrategie enthält; und
- als Reaktion auf den Empfang der Aktualisierungsantwort für die lokale Navigationsoptimierungsstrategie, Aktualisieren der gespeicherten lokalen Strategiedaten, die die lokale Navigationsoptimierungsstrategie beschreiben, basierend auf den Aktualisierungsdaten, die in der empfangenen Aktualisierungsantwort für die lokale Navigationsoptimierungsstrategie enthalten sind;
wobei das autonome Kraftfahrzeugfahrsystem (1) **dadurch gekennzeichnet ist, dass** es ferner dazu konzipiert ist, die lokale Navigationsoptimierungsstrategie zu implementieren, die einem wiederkehrenden Niedriggeschwindigkeitsmanöver über ein künstliches neuronales Netz (Artificial Neural Network, ANN), praktischerweise über ein tiefes neuronales Netz (Deep Neuronal Network, DNN), noch praktischer ein tiefes neuronales Faltungsnetz (Deep Convolutional Neuronal Network, DCNN) zugeordnet ist, in dem die Gewichte des künstlichen neuronalen Netzes den Manöverdaten, die das zugeordnete wiederkehrenden Niedriggeschwindigkeitsmanöver beschreiben, zugeordnet gespeichert sind;
und dass der kollaborative Navigationsoptimierungsansatz die Form eines kollaborativen maschinellen Lernansatzes aufweist, wobei die Manöverdaten, die in den Aktualisierungsanforderungen für die lokale Navigationsoptimierungsstrategie enthalten sind, die von dem autonomen Kraftfahrzeugfahrsystem (1) der Kraftfahrzeuge (2) gesendet werden, die mit dem entfernten Servicezentrum (10) beim Optimieren der Navigation beim autonomen Fahren während der gespeicherten wiederkehrenden Niedriggeschwindigkeitsmanöver zusammenarbeiten, dazu verwendet werden, ein globales künstliches neuronales Netz zu trainieren, das eine globale Navigationsoptimierungsstrategie implementiert, die durch das entfernte Servicezentrum (10) implementiert wird und von demselben Typ ist wie die lokalen künstlichen neuronalen Netze, die die lokalen Navigationsoptimierungsstrategien implementieren und auf welchen basierend Aktualisierungsgewichte für das Aktualisieren der gespeicherten Gewichte der lokalen künstlichen neuronalen Netze, die die lokalen Navigationsoptimierungsstrategien implementieren, dann berechnet und durch das entfernte Servicezentrum (10) an das autonome Kraftfahrzeugfahrsystem (1) zum Aktualisieren der gespeicherten Gewichte der lokalen künstlichen neuronalen Netze, die die lokalen Navigationsoptimierungsstrategien implementieren, gesendet werden.

2. Autonomes Kraftfahrzeugfahrsystem (1) nach Anspruch 1, das ferner dazu konzipiert ist, eine lokale Navigationsoptimierungsstrategie eines wiederkehrenden Niedriggeschwindigkeitsmanövers zu optimieren:
- Senden an das entfernte Servicezentrum (10) einer Aktualisierungsanforderung für die lokale Navigationsoptimierungsstrategie, die die Manöverdaten des wiederkehrenden Niedriggeschwindigkeitsmanövers enthält;
- Empfangen von dem entfernten Servicezentrum (10) einer Aktualisierungsantwort für die lokale Navigationsoptimierungsstrategie, die Aktualisierungsgewichte zum Aktualisieren des lokalen künstlichen neuronalen Netzes enthält, das die zugeordnete Navigationsoptimierungsstrategie implementiert; und
- als Reaktion auf den Empfang einer Aktualisierungsantwort für die lokale Navigationsoptimierungsstrategie, Aktualisieren der gespeicherten Gewichte des lokalen künstlichen neuronalen Netzes, das die zugeordnete lokale Navigationsoptimierungsstrategie basierend auf den Aktualisierungsgewichten, die in der empfangenen Aktualisierungsantwort für die lokale Navigationsoptimierungsstrategie enthalten sind, implementiert.

3. Autonomes Kraftfahrzeugfahrsystem (1) nach Anspruch 1 oder 2, das ferner konzipiert ist zum:
- Speichern, den Manöverdaten der wiederkehrenden Niedriggeschwindigkeitsmanöver zugeordnet, von Daten, die autonome Fahrwege beschreiben, die beim autonomen Fahren durch das Kraftfahrzeug (2) während der Durchführung beim autonomen Fahren der wiederkehrenden Niedriggeschwindigkeitsmanöver durchgeführt werden;
- Prüfen, ob ein autonomer Fahrweg, der basierend auf einer lokalen Navigationsoptimierungsstrategie zum Durchführen beim autonomen Fahren eines zugeordneten wiederkehrenden Niedriggeschwindigkeitsmanövers besser ist als der gespeicherte autonome Fahrweg, der dem Niedriggeschwindigkeitsmanöver zugeordnet ist, basierend auf einem Wegbewertungskriterium;
- falls bestimmt wird, dass der berechnete autonome Fahrweg besser ist als der gespeicherte autonome Fahrweg, Aktualisieren des gespeicherten autonomen Fahrwegs basierend auf dem berechneten autonomen Fahrweg, beispielsweise durch Ersetzen des gespeicherten autonomen Fahrwegs durch den berechneten autonomen Fahrweg, und Wiederholen des wiederkehrenden Niedriggeschwindigkeitsmanövers beim autonomen Fahren unter Verwendung des berechneten autonomen Fahrwegs; und
- falls bestimmt wird, dass der berechnete autonome Fahrweg schlechter ist als der gespeicherte autonome Fahrweg, Implementieren eines oder beider der folgenden Vorgänge:
• Durchführen des wiederkehrenden Niedriggeschwindigkeitsmanövers beim autonomen Fahren unter Verwendung des gespeicherten autonomen Fahrwegs, und
• Senden an das entfernte Servicezentrum (10) einer Aktualisierungsanforderung für die lokale Navigationsoptimierungsstrategie, Warten auf eine Aktualisierungsantwort für die lokalen Navigationsoptimierungsstrategie, Aktualisieren der lokalen Navigationsoptimierungsstrategie und Berechnen eines neuen autonomen Fahrwegs mit relativen Längs- und seitlichen Dynamiken für autonomes Fahren.

4. Kollaboratives autonomes Kraftfahrzeugfahrsystem, umfassend:
- das autonome Kraftfahrzeugfahrsystem (1) nach einem der vorstehenden Ansprüche; und
- das entfernte Servicezentrum (10);
wobei das autonome Kraftfahrzeugfahrsystem (1) und das entfernte Datenzentrum (10) dazu konzipiert sind, beim Implementieren des kollaborativen Navigationsoptimierungsansatzes, auf dem basierend das Durchführen wiederkehrender Niedriggeschwindigkeitsmanöver beim autonomen Fahren durch das Kraftfahrzeug (2) optimiert wird, zu kommunizieren und zusammenzuarbeiten.

5. Kollaboratives autonomes Kraftfahrzeugfahrsystem nach Anspruch 4, wobei das entfernte Servicezentrum (10) konfiguriert ist zum:
- Empfangen von dem autonomen Kraftfahrzeugfahrsystem (1) der Aktualisierungsanforderung für die lokale Navigationsoptimierungsstrategie, die die Manöverdaten des wiederkehrenden Niedriggeschwindigkeitsmanövers enthält;
- als Reaktion auf den Empfang der Aktualisierungsantwort für die lokale Navigationsoptimierungsstrategie, Berechnen von Aktualisierungsdaten zum Aktualisieren der lokalen Navigationsoptimierungsstrategie basierend auf den Manöverdaten, die in der empfangenen Aktualisierungsanforderung für die lokale Navigationsoptimierungsstrategie enthalten sind und auf einer globalen Navigationsoptimierungsstrategie; und
- Senden an das autonome Kraftfahrzeugfahrsystem (1) einer Aktualisierungsantwort für die lokale Navigationsoptimierungsstrategie, die die berechneten Aktualisierungsdaten zum Aktualisieren der lokalen Navigationsoptimierungsstrategie enthält.

6. Kollaboratives autonomes Kraftfahrzeugfahrsystem nach Anspruch 5, wobei das entfernte Servicezentrum (10) ferner konzipiert ist zum:
- Berechnen der globalen Navigationsoptimierungsstrategie basierend auf den Manöverdaten der wiederkehrenden Niedriggeschwindigkeitsmanöver, die in den Aktualisierungsanforderungen für die lokale Navigationsoptimierungsstrategie enthalten sind, die von dem autonomen Kraftfahrzeugfahrsystem (1) empfangen werden, die mit dem entfernten Servicezentrum (10) beim Optimieren der Performance wiederkehrender Niedriggeschwindigkeitsmanöver beim autonomen Fahren zusammenzuarbeiten.

7. Kollaboratives autonomes Kraftfahrzeugfahrsystem nach Anspruch 5 oder 6, wobei das entfernte Servicezentrum (10) ferner konzipiert ist zum:
- Implementieren der globalen Navigationsoptimierungsstrategie über ein globales künstliches neuronales Netz von demselben Typ wie die lokalen künstlichen neuronalen Netze, die die lokalen Navigationsoptimierungsstrategien implementieren; und
- Trainieren des globalen künstlichen neuronalen Netzes, das die globale Navigationsoptimierungsstrategie implementiert, basierend auf den Manöverdaten der wiederkehrenden Niedriggeschwindigkeitsmanöver, die in den Aktualisierungsanforderungen für die lokale Navigationsoptimierungsstrategie enthalten sind, die von den autonomen Kraftfahrzeugfahrsystemen (1) empfangen werden, die mit dem entfernten Servicezentrum (10) beim Optimieren der Performance wiederkehrender Niedriggeschwindigkeitsmanöver beim autonomen Fahren zusammenarbeiten.

8. Kollaboratives autonomes Kraftfahrzeugfahrsystem nach Anspruch 7, verbunden mit Anspruch 2, wobei das entfernte Servicezentrum (10) ferner konzipiert ist zum:
- Empfangen von dem autonomen Kraftfahrzeugfahrsystem (1) der Aktualisierungsanforderung für die lokale Navigationsoptimierungsstrategie, die die Manöverdaten des wiederkehrenden Niedriggeschwindigkeitsmanövers enthält;
- als Reaktion auf den Empfang der Aktualisierungsanforderung für die lokale Navigationsoptimierungsstrategie, Berechnen der Aktualisierungsgewichte zum Aktualisieren der gespeicherten Gewichte des künstlichen neuronalen Netzes, das die zugeordnete lokale Navigationsoptimierungsstrategie basierend auf dem globalen künstlichen neuronalen Netz implementiert, das die globale Navigationsoptimierungsstrategie implementiert, und auf den Manöverdaten des wiederkehrenden Niedriggeschwindigkeitsmanövers, das in der empfangenen Aktualisierungsanforderung für die lokale Navigationsoptimierungsstrategie enthalten ist; und
- Senden an das autonome Kraftfahrzeugfahrsystem (1) der Aktualisierungsantwort für die lokale Navigationsoptimierungsstrategie, die die Aktualisierungsgewichte zum Aktualisieren der gespeicherten Gewichte des lokalen künstlichen neuronalen Netzes enthält, das die berechnete lokale Navigationsoptimierungsstrategie implementiert.

9. Software, die in ein autonomes Kraftfahrzeugfahrsystem (1) und ein entferntes Servicezentrum (10) geladen werden kann und dazu konzipiert ist, beim Ausführen durch das autonome Kraftfahrzeugfahrsystem (1) und durch das entfernte Servicezentrum (10) das autonome Kraftfahrzeugfahrsystem (1) dazu zu veranlassen, nach einem der Ansprüche 1 bis 3 konfiguriert zu werden, und das entfernte Servicezentrum (10) zu veranlassen, wie in einem der Ansprüche 4 bis 8 beansprucht konfiguriert zu werden.

## Revendications

1. Système de conduite autonome automobile (1) pour amener un véhicule à moteur (2) à réaliser des manoeuvres à faible vitesse récurrentes en conduite autonome dans des zones sans carte routière numérique ;
le système de conduite autonome automobile (1) est configuré pour stocker des manoeuvres à faible vitesse récurrentes sous la forme de données de manoeuvre associées décrivant les environnements où les manoeuvres à faible vitesse récurrentes doivent être répétées en conduite autonome et comprenant des données de géolocalisation des points de départ et d'arrivée des manoeuvres à faible vitesse récurrentes et de contraintes spatiales, obstacles et dimensions associés identifiés dans les environnements où les manoeuvres à faible vitesse récurrentes doivent être répétées en conduite autonome lorsque les manoeuvres à faible vitesse récurrentes ont été stockées ;
le système de conduite autonome automobile (1) est configuré pour amener le véhicule à moteur (2) à répéter des manoeuvres à faible vitesse récurrentes en conduite autonome stockées, en provoquant une conduite autonome du véhicule à moteur (2) le long de trajectoires de conduite autonome calculées avec des dynamiques longitudinales et latérales associées, en se basant aussi bien sur les données de manoeuvre des manoeuvres à faible vitesse récurrentes que sur les données provenant d'un système sensoriel automobile, les trajectoires de conduite autonome et les dynamiques longitudinales et latérales associées étant calculées en tenant compte aussi bien des contraintes spatiales, obstacles et dimensions associés identifiés dans les environnements où les manoeuvres à faible vitesse récurrentes doivent être répétées en conduite autonome, identifiés lorsque les manoeuvres à faible vitesse récurrentes ont été stockées, que de toute nouvelle contrainte spatiale et/ou tout nouvel obstacle apparus dans les environnements où les manoeuvres à faible vitesse récurrentes doivent être effectuées en conduite autonome après que les manoeuvres à faible vitesse récurrentes ont été stockées, et qui peuvent être identifiés sur la base des données provenant du système sensoriel automobile ;
le système de conduite autonome automobile (1) est conçu en outre pour optimiser la répétition en conduite autonome de manoeuvres à faible vitesse récurrentes stockées sur la base d'une approche d'optimisation de navigation collaborative mise en oeuvre par le système de conduite autonome automobile (1) et un centre de services à distance (10) ;
le système de conduite autonome automobile (1) est conçu en outre pour optimiser les performances en conduite autonome d'une manoeuvre à faible vitesse récurrente :
- en stockant, en association avec les données de manoeuvre de la manoeuvre à faible vitesse récurrente, des données de politique locale décrivant une politique d'optimisation de navigation locale qui permet d'optimiser les performances de la manoeuvre à faible vitesse récurrente en conduite autonome ; et
- en optimisant la politique d'optimisation de navigation locale associée à la manoeuvre à faible vitesse récurrente via ladite approche d'optimisation de navigation collaborative ;
le système de conduite autonome automobile (1) est conçu en outre pour optimiser une politique d'optimisation de navigation locale d'une manoeuvre à faible vitesse récurrente :
- en envoyant au centre de services à distance (10) une demande de mise à jour de politique d'optimisation de navigation locale contenant les données de manoeuvre stockées de la manoeuvre à faible vitesse récurrente ;
- en recevant du centre de services à distance (10) une réponse de mise à jour de politique d'optimisation de navigation locale contenant des données de mise à jour pour la mise à jour de la politique d'optimisation de navigation locale ; et
- en réponse à la réception de la réponse de mise à jour de politique d'optimisation de navigation locale, en mettant à jour les données de politique locale stockées décrivant la politique d'optimisation de navigation locale sur la base des données de mise à jour contenues dans la réponse de mise à jour de politique d'optimisation de navigation locale reçue ;
le système de conduite autonome automobile (1) est **caractérisé en ce qu'**il est en outre conçu pour mettre en oeuvre la politique d'optimisation de navigation locale associée à une manoeuvre à faible vitesse récurrente via un réseau neuronal artificiel (ANN), de préférence un réseau neuronal profond (DNN), de manière davantage préférée un réseau neuronal convolutif profond (DCNN), dans lequel les poids de réseau neuronal artificiel sont stockés en association avec les données de manoeuvre décrivant la manoeuvre à faible vitesse récurrente associée ;
et **en ce que** l'approche d'optimisation de navigation collaborative est sous la forme d'une approche d'apprentissage machine collaboratif où les données de manoeuvre, contenues dans les demandes de mise à jour de politique d'optimisation de navigation locale envoyées par les systèmes de conduite autonome automobile (1) des véhicules à moteur (2) qui coopèrent avec le centre de services à distance (10) pour optimiser la navigation en conduite autonome pendant les manoeuvres à faible vitesse récurrentes stockées, sont utilisées pour entraîner un réseau neuronal artificiel global qui met en oeuvre une politique d'optimisation de navigation globale mise en oeuvre par le centre de services à distance (10) et qui est du même type que les réseaux neuronaux artificiels locaux mettant en oeuvre les politiques d'optimisation de navigation locale et sur la base desquels les poids de mise à jour pour la mise à jour des poids stockés des réseaux neuronaux artificiels locaux mettant en oeuvre les politiques d'optimisation de navigation locale sont ensuite calculés et envoyés par le centre de services à distance (10) aux systèmes de conduite autonome automobile (1) pour mettre à jour les poids stockés des réseaux neuronaux artificiels locaux mettant en oeuvre les politiques d'optimisation de navigation locale.

2. Système de conduite autonome automobile (1) selon la revendication 1, conçu en outre pour optimiser une politique d'optimisation de navigation locale d'une manoeuvre à faible vitesse récurrente :
- envoyant au centre de services à distance (10) une demande de mise à jour de politique d'optimisation de navigation locale contenant les données de manoeuvre de la manoeuvre à faible vitesse récurrente ;
- recevant du centre de services à distance (10) une réponse de mise à jour de politique d'optimisation de navigation locale contenant des poids de mise à jour pour la mise à jour des poids stockés du réseau neuronal artificiel local mettant en oeuvre la politique d'optimisation de navigation locale associée ; et
- en réponse à la réception d'une réponse de mise à jour de politique d'optimisation de navigation locale, mettant à jour des poids stockés du réseau neuronal artificiel local mettant en oeuvre la politique d'optimisation de navigation locale associée sur la base des poids de mise à jour contenus dans la réponse de mise à jour de politique d'optimisation de navigation locale reçue.

3. Système de conduite autonome automobile (1) selon la revendication 1 ou 2, conçu en outre pour :
- stocker, en association avec les données de manoeuvre des manoeuvres à faible vitesse récurrentes, des données décrivant des trajectoires de conduite autonome effectuées en conduite autonome par le véhicule à moteur (2) pendant la performance en conduite autonome des manoeuvres à faible vitesse récurrentes ;
- vérifier si une trajectoire de conduite autonome calculée sur la base d'une politique d'optimisation de navigation locale pour effectuer une manoeuvre à faible vitesse récurrente en conduite autonome associée est meilleure que la trajectoire de conduite autonome stockée associée à la manoeuvre à faible vitesse récurrente, sur la base d'un critère d'évaluation de trajectoire exclusif ;
- si la trajectoire de conduite autonome calculée est déterminée comme étant meilleure que la trajectoire de conduite autonome stockée, mettre à jour la trajectoire de conduite autonome stockée sur la base de la trajectoire de conduite autonome calculée, par exemple en remplaçant la trajectoire de conduite autonome stockée par la trajectoire de conduite autonome calculée, et répéter la manoeuvre à faible vitesse récurrente en conduite autonome en utilisant la trajectoire de conduite autonome calculée ; et
- si la trajectoire de conduite autonome calculée est déterminée comme étant moins bonne que la trajectoire de conduite autonome stockée, mettre en oeuvre l'une des opérations suivantes, ou les deux :
∘ effectuer la manoeuvre à faible vitesse récurrente en conduite autonome à l'aide de la trajectoire de conduite autonome stockée, et
∘ envoyer au centre de services à distance (10) une demande de mise à jour de politique d'optimisation de navigation locale, attendre une réponse de mise à jour de politique d'optimisation de navigation locale, mettre à jour la politique d'optimisation de navigation locale, et calculer une nouvelle trajectoire de conduite autonome, avec les dynamiques longitudinales et latérales de conduite autonome relatives.

4. Système de conduite autonome automobile collaboratif comprenant :
- le système de conduite autonome automobile (1) selon l'une des revendications précédentes ; et
- le centre de services à distance (10) ;
le système de conduite autonome automobile (1) et le centre de services à distance (10) sont conçus pour communiquer et coopérer pour la mise en oeuvre de ladite approche d'optimisation de navigation collaborative sur la base de laquelle la performance des manoeuvres à faible vitesse récurrentes en conduite autonome par le véhicule à moteur (2) est optimisée.

5. Système de conduite autonome automobile collaboratif selon la revendication 4, dans lequel le centre de services à distance (10) est configuré pour :
- recevoir du système de conduite autonome automobile (1) la demande de mise à jour de politique d'optimisation de navigation locale contenant les données de manoeuvre de la manoeuvre à faible vitesse récurrente ;
- en réponse à la réception de la demande de mise à jour de politique d'optimisation de navigation locale, calculer des données de mise à jour pour la mise à jour de la politique d'optimisation de navigation locale sur la base des données de manoeuvre contenues dans la demande de mise à jour de politique d'optimisation de navigation locale reçue et d'une politique d'optimisation de navigation globale ; et
- envoyer au système de conduite autonome automobile (1) une réponse de mise à jour de politique d'optimisation de navigation locale contenant les données de mise à jour calculées pour mettre à jour la politique d'optimisation de navigation locale.

6. Système de conduite autonome automobile collaboratif selon la revendication 5, dans lequel le centre de services à distance (10) est en outre conçu pour :
- calculer la politique d'optimisation de navigation globale sur la base des données de manoeuvre des manoeuvres à faible vitesse récurrentes contenues dans les demandes de mise à jour de politique d'optimisation de navigation locale reçues des systèmes de conduite autonome automobile (1) qui coopèrent avec le centre de services à distance (10) pour l'optimisation des performances des manoeuvres à faible vitesse récurrentes en conduite autonome.

7. Système de conduite autonome automobile collaboratif selon la revendication 5 ou 6, dans lequel le centre de services à distance (10) est en outre conçu pour :
- mettre en oeuvre la politique d'optimisation de navigation globale via un réseau neuronal artificiel global du même type que les réseaux neuronaux artificiels locaux mettant en oeuvre les politiques d'optimisation de navigation locale ; et
- entraîner le réseau neuronal artificiel global mettant en oeuvre la politique d'optimisation de navigation globale sur la base des données de manoeuvre des manoeuvres à faible vitesse récurrentes contenues dans les demandes de mise à jour de politique d'optimisation de navigation locale reçues des systèmes de conduite autonome automobile (1) qui coopèrent avec le centre de services à distance (10) pour l'optimisation des performances des manoeuvres à faible vitesse récurrentes en conduite autonome.

8. Système de conduite autonome automobile collaboratif selon la revendication 7 lorsqu'elle dépend de la revendication 2, dans lequel le centre de services à distance (10) est en outre conçu pour :
- recevoir du système de conduite autonome automobile (1) la demande de mise à jour de politique d'optimisation de navigation locale contenant les données de manoeuvre de la manoeuvre à faible vitesse récurrente ;
- en réponse à la réception de la demande de mise à jour de politique d'optimisation de navigation locale, calculer les poids de mise à jour pour la mise à jour des poids stockés du réseau neuronal artificiel mettant en oeuvre la politique d'optimisation de navigation locale associée sur la base du réseau neuronal artificiel global mettant en oeuvre la politique d'optimisation de navigation globale et des données de manoeuvre de la manoeuvre à faible vitesse récurrente contenues dans la demande de mise à jour de politique d'optimisation de navigation locale reçue ; et
- envoyer au système de conduite autonome automobile (1) la réponse de mise à jour de politique d'optimisation de navigation locale contenant les poids de mise à jour pour la mise à jour des poids stockés du réseau neuronal artificiel local mettant en oeuvre la politique d'optimisation de navigation locale calculée.

9. Logiciel pouvant être chargé dans un système de conduite autonome automobile (1) et dans un centre de services à distance (10) et conçu pour, lorsqu'il est exécuté par le système de conduite autonome automobile (1) et par le centre de services à distance (10), faire en sorte que le système de conduite autonome automobile (1) soit configuré conformément à l'une des revendications 1 à 3, et que le centre de services à distance (10) soit configuré conformément à l'une des revendications 4 à 8.
